(19) Europäisches Patentamt
European Patent Office
Office européen des brevets

(11) Veröffentlichungsnummer: **0 236 861 B1**

(12) # EUROPÄISCHE PATENTSCHRIFT

(45) Veröffentlichungstag der Patentschrift: **27.12.90**

(51) Int. Cl.[5]: **C08L 1/10** // (C08L1/10, 83:10)

(21) Anmeldenummer: **87102699.3**

(22) Anmeldetag: **25.02.87**

(54) **Celluloseester-Formmassen mit verbesserter Zähigkeit.**

(30) Priorität: **07.03.86 DE 3607626**

(43) Veröffentlichungstag der Anmeldung: **16.09.87 Patentblatt 87/38**

(45) Bekanntmachung des Hinweises auf die Patenterteilung: **27.12.90 Patentblatt 90/52**

(84) Benannte Vertragsstaaten: **DE FR GB IT**

(56) Entgegenhaltungen:
**CH-A- 471 839**
**US-A- 3 511 699**
**US-A- 4 094 695**
**US-A- 4 161 498**

(73) Patentinhaber: **BAYER AG, D-5090 Leverkusen 1 Bayerwerk(DE)**

(72) Erfinder: **Eichenauer, Herbert, Dr., Goethestrasse 71, D-4047 Dormagen 1(DE)**
Erfinder: **Lindner, Christian, Dr., Riehlerstrasse 200, D-5000 Köln 60(DE)**
Erfinder: **Müller, Friedemann, Dr., Am Steinacker 5, D-4040 Neuss 21(DE)**
Erfinder: **Höcker, Hartwig, Prof. Dr., Soerser Winkel 20, D-5100 Aachen(DE)**
Erfinder: **Keul, Helmut, Dr., Kochstrasse 3, D-7500 Karlsruhe 1(DE)**

EP 0 236 861 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen aus Celluloseestern oder Cellulosemischestern und Blockcopolymeren mit wiederkehrenden Struktureinheiten aus der Reihe der Polysiloxane und wiederkehrenden Struktureinheiten aus der Reihe der aliphatischen Polyester, Polyether oder Polyetherester.

Formmassen aus Celluloseacetat können ohne Zusatz von Weichmachern nicht thermoplastisch verarbeitet werden, da sich dieser Ester vor dem Erweichen zu zersetzen beginnt. Auch bei Celluloseacetopropionaten und -acetobutyraten liegen die Erweichungs- und Zersetzungstemperatur so nahe beieinander, daß auch diese Formmassen vor ihrer thermoplastischen Verarbeitung mit Weichmachern abgemischt werden müssen. Damit erreicht man die notwendige Herabsetzung der Verarbeitungstemperatur und Verarbeitungsviskosität.

Als Weichmacher für organische Celluloseester dienen vornehmlich aliphatische Ester der Phthalsäure, Adipinsäure, Azelainsäure, Sebacinsäure und Phosphorsäure wie beispielsweise Dimethylphthalat, Diethylphthalat, Dibutyladipat, Dioctyladipat, Dibutylacetat, Trichlorethylphosphat und Tributylphosphat. Oft ist es auch vorteilhaft, Weichmachergemische einzusetzen.

Obwohl die mit solchen Weichmachern modifizierten Celluloseesterformmassen brauchbare Eigenschaften besitzen, ist es für manche Anwendungszwecke wünschenswert, Formmassen mit hoher Schlagzähigkeit, insbesondere bei tiefen Temperaturen, und gleichzeitig mit hoher Wärmeformbeständigkeit zur Verfügung zu haben.

Gegenstand der Erfindung sind thermoplastische Formmassen aus

(1) 70 bis 99,9 Gew.-%, vorzugsweise 75 bis 99 Gew.%, eines Celluloseesters oder Cellulosemischesters,

(2) 0,1 bis 30 Gew.-%, vorzugsweise 0,25 bis 25 Gew.-%, eines blockartig aufgebauten Kautschukpolymeren aus wiederkehrenden Struktureinheiten (I) mit Molekulargewichten von 10.000 bis 1.000.000, vorzugsweise von 10.000 bis 50.000 und von 100.000 bis 500.000

$$-\!\!\left[ A\text{-}B \right]\!\!- \qquad \text{I}$$

wobei A bifunktionelle Polysiloxansegmente der Formel

$$-\!\!\left[ (R^1)(R^2)SiO \right]_x\!\!- \qquad \text{II}$$

mit $R^1$ und $R^2$ = Aryl (insbesondere Phenyl) oder Alkyl(insbesondere Methyl) und
x eine Zahl, so daß das Molekulargewicht ≧500 ist und
B bifunktionelle aliphatische Polyester- und/oder aliphatische Polyethersegmente mit Molekulargewichten ≧ 800 bedeuten und die Glasübergangstemperaturen der polymeren Blöcke A und B unterhalb von 20°C, bevorzugt unterhalb von -10°C, liegen,

(3) die zusätzlich 0 bis 30 Gew.-%, vorzugsweise 2 bis 25 Gew.-%, bezogen auf das Gemisch von 1 und 2 Weichmachern enthalten

Besonders bevorzugt sind Gemische aus 70-99,9 Gew.-% (1), 0,1-5 Gew.-% (2) und 0-30 Gew.-% (3) (jeweils bezogen auf Gesamtgemisch) wobei sich die Prozentzahlen zu 100 addieren müssen und insbesondere Gemische aus 75-99 Gew.-% (1), 0,25-3 Gew.-% (2) und 2-25 Gew.-% (3) (jeweils bezogen auf Gesamtmischung) wobei sich die Prozentzahlen zu 100 addieren müssen.

Geeignete Celluloseester (1) zur Herstellung der erfindungsgemäßen Formmassen sind Celluloseester aliphatischer Carbonsäuren mit 1 bis 5 C-Atomen, vorzugsweise Celluloseacetat, -acetopropionat und -acetobutyrat.

Verfahren zur Herstellung von organischen Celluloseestern sind seit langem bekannt und werden beispielsweise in Ullmanns Encyklopädie der technischen Chemie (Verlag Urban u. Schwarzenberg, München-Berlin, 1963) im 5. Band auf den Seiten 182 bis 201 beschrieben.

Bevorzugte Celluloseacetobutyrate enthalten
40 bis 50 Gew.-% Buttersäuregruppen und
15 bis 26 Gew.-% Essigsäuregruppen.

Besonders bevorzugt für die erfindungsgemäßen Formmassen eignen sich Celluloseacetobutyrate mit folgender Zusammensetzung:
42 bis 46 Gew.-% Buttersäuregruppen und
18 bis 22 Gew.-% Essigsäuregruppen.

Bevorzugte Celluloseacetopropionate enthalten im allgemeinen
50 bis 66 Gew.-% Propionsäuregruppen und
1 bis 12 Gew.-% Essigsäuregruppen,
und besonders bevorzugte Celluloseacetopropionate haben folgende Zusammensetzung:
54 bis 60 Gew.-% Propionsäuregruppen und
4 bis 9 Gew.-% Essigsäuregruppen.

Von den Celluloseacetaten werden bevorzugt Sekundär-Celluloseacetate eingesetzt.

Die relativen Viskositäten ($\eta_{rel}$) von 2 Gew.-%igen Lösungen der verwendeten aliphatischen Celluloseester in Aceton liegen bei 20°C zwischen 2,5 und 6,0, bevorzugt zwischen 3,5 und 5,0.

Als blockartig aufgebaute Kautschukpolymere (2) werden Blockcopolymere aus bifunktionellen Polysiloxansegmenten (A) und bifunktionellen aliphatischen Polyester- und/oder aliphatischen Polyethersegmenten (B) eingesetzt.

Die in den Blockcopolymeren enthaltenen Polysiloxan-Blöcke (A) sind Polydialkyl-, Polydiaryl- oder Polyarylalkylsiloxane, insbesondere Polydimethylsiloxan-oder Polymethylphenylsiloxan-Reste. Sie besitzen Blockmolekulargewichte von 500 bis 20,000, insbesondere 1.000 bis 6.000; sie sind weitgehend linear.

Die die Blöcke B bildenden Polyestersegmente leiten sich von aliphatischen gesättigten oder ungesättigten Dicarbonsäuren ab, z.B. von Oxalsäure, Bernsteinsäure, Adipinsäure, Azelainsäure, Sebacinsäure, Kohlensäure, Maleinsäure, Fumarsäure, Butadiendicarbonsäure oder auch von höheren aliphatischen Dicarbonsäuren mit mehr als 10 C-Atomen im Molekül. Als Diolkomponenten der Polyester eignen sich besonders Ethandiol, Butandiol, Hexandiol, Neopentylglykol, Alkylenetherdiole mit Molekulargewichten bis zu etwa 150, sowie ungesättigte aliphatische Diole wie Butendiole, und höhere ungesättigte Diole mit mehr als 10 C-Atomen im Molekül. Als Blöcke B eignen sich auch Polyetherdiolreste aus der Reihe der Polyalkylenether, z.B. Polyformaldehydreste, Polytetrahydrofuranreste, Polyethylenoxidreste, Polybutylenoxidreste sowie deren Copolymere.

In den Blockcopolymeren aus Einheiten der Formel

-A-B-können als Komponente B nicht nur Polyester- oder nur Polyether-Blöcke vorliegen. Es kann auch ein Teil der Blöcke B Polyester und der andere Teil Polyether sein, schließlich können auch Blöcke B vorliegen, die nebeneinander Ether- und Esterfunktionen enthalten. Setzt man zur Herstellung der Blockcopolymeren neben linearen auch verzweigte Polyester, Polyether oder Polysiloxane ein, so werden Blockcopolymere erhalten, die verzweigte, aber unvernetzte Strukturen aufweisen.

Ebenfalls geeignet als Komponenten B sind Polyether- oder Poylesterblöcke, die selbst eine Sequenz- oder auch Blockstruktur aufweisen, z.B. Polyethylenoxid-Polypropylenoxid-Blockcopolymer sowie Polyester-Polyether-Blockcopolymer.

Geeignete Blockcopolymere sind ebenfalls aliphatische Polymere, die die Gruppierungen -A-B- enthalten; solche Produkte sind z.B. Umsetzungsprodukte aus Polyether- oder Polyesterdiolen und Bisacylpolysiloxanen in Kombination mit Polysiloxandiolen. Dabei werden mehr oder weniger höhere Gehalte an Polysiloxan aufweisende Polymere erhalten, die eine beliebige Menge an Gruppierung -A-B-eingebaut enthalten.

Die Blockcopolymerisate können hergestellt werden, indem man bis-acylierte Polysiloxane mit Diolen aus der Reihe der Polyester oder Polyether polykondensiert. Normalerweise werden die Ausgangskomponenten in äquimolaren Mengen eingesetzt; es kann aber vorteilhaft sein, die eine oder andere Komponente in geringem Überschuß einzusetzen. Man kann dann das Endmolekulargewicht besser steuern und die Art der Endgruppen bestimmen. Um das Molekulargewicht schon bei der Synthese zu bestimmen, kann man Molekulargewichtsregler verwenden, z.B. monofunktionelle Verbindungen wie Monoalkohole, monoacylierte Polysiloxane, Anhydride, Ester und Säurechloride.

Die Synthese der Blockcopolymeren kann bei Temperaturen von 40 bis etwa 200°C durchgeführt werden, insbesondere bei 80 bis 150°C. Dabei kann ohne oder mit Lösungsmittel gearbeitet werden, z.B. mit aromatischen Kohlenwasserstoffen, Paraffinen, chlorierten Kohlenwasserstoffen, flüssigen Amiden, Estern, Ketonen und Ethern.

Man benutzt bevorzugt Katalysatoren und/oder säurebindende Mittel, z.B. organische oder anorganische Basen wie Salze (Carbonate von Alkali- oder Erdalkalimetallen) oder lösliche organische Basen, wie tertiäre Amine, auch Phasentransferkatalysatoren, Phosphine, Lewisbasen sind geeignet. Unter Umständen ist bei bestimmten Reaktionstemperaturen auch das Arbeiten in Gegenwart katalytischer Mengen starker Säuren vorteilhaft, insbesondere dann, wenn man die Polykondensation unter Abdestillation der gebildeten Säuren durchführt.

Als Weichmacher werden die üblicherweise in Celluloseestern eingesetzten Verbindungen verwendet. Geeignete Weichmacher sind z.B. Dimethylphthalat, Diethylphthalat, Triphenylphosphat, Methylethylenglykolphthalat, Di-n-butylsebacat, Ethylbutylenglykol-phthalat, Butyl-butylenglykol-phthalat, Dibutylphthalat, Dioctyladipat, Dioctylphthalat, Butylbenzylphthalat und Triacetin.

Die erfindungsgemäßen Formmassen können außerdem Additive enthalten, z.B. um die Polymermischungen zu färben, zu pigmentieren, um ihre Oxidations- oder Lichtbeständigkeit zu verbessern oder Entflammbarkeit zu verringern.

Die erfindungsgemäßen Formmassen auf Basis organischer Celluloseester und blockartig aufgebauter Polysiloxan-haltiger Kautschukpolymerisate zeigen einen bemerkenswerten Anstieg der nach DIN 53 453 gemessenen Kerbschlagzähigkeit unter Beibehalt der Wärmeformbeständigkeit, die z.B. nach DIN 53 460 als Vicat-Erweichungstemperatur gemessen werden kann.

Eine besondere Ausführungsform der Erfindung ist das Homogenisieren der Mischungskomponenten auf Ein- oder Mehrwellenmischextrudern mit anschließender Granuliervorrichtung. Dabei ist zu beachten, daß die Extruderwellen so gestaltet sind, daß man gute mechanische Durchmischung erreicht. Es lassen sich bei dieser Verfahrensweise auch direkt Fertigartikel wie Folien, Stränge oder Spritzgußkörper herstellen.

Die erfindungsgemäßen modifizierten Celluloseester können auch durch Lösen der Mischungskomponenten in geeigneten Lösungsmitteln oder Lösungsmittelgemischen und anschließendem Verdampfen der Lösungsmittel hergestellt werden. Das Verdampfen des Lösungsmittels kann entweder durch Ausgießen eines Filmes und Abdampfen der flüchtigen Lösungsmittel bei Normaldruck oder Vakuum bei Temperaturen von 20°C bis 220°C oder Eindampfen mittels Entgasungsextrudern erfolgen.

Als geeignete Lösungsmittel seien beispielhaft genannt: Ketone wie Aceton, Methylethylketon, Cyclohexanon oder Diethylketon, Ester wie Essigsäuremethylester, Essigsäureethylester oder -butylester oder Ameisensäuremethylester, Ether wie Diethylether, Methyl-, Ethyl-, Propyl- oder Butylether des Ethylenglykols oder Diethylenglykols oder Tetrahydrofuran, Amide wie Dimethylformamid oder Diethylformamid, chlorierte Kohlenwasserstoffe wie Dichlormethan, Trichlormethan, Tetrachlormethan, Dichlorethan oder Dichlorethylen oder substituierte oder unsubstituierte aromatische Lösungsmittel wie Benzol, Toluol, Xylol, Chlorbenzol, Dichlorbenzol, Nitrobenzol, Anisol, Phenol oder Kresol.

Die erfindungsgemäßen Formmassen können nach den normalen Methoden der Kunststoffverarbeitung verarbeitet werden, beispielsweise durch Spritzguß, Extrusion oder Hohlkörperblasen. Dabei zeigen sie eine gute Fließfähigkeit.

Beispiele

Beispiel 1

Herstellung eines blockartig aufgebauten Polysiloxan-haltigen Kautschukpolymeren

1.000 Gewichtsteile eines Polytetrahydrofurandiols mit einem Molekulargewicht von 2.000 (bestimmt aus der OH-Zahl), 2.000 Gewichtsteile eines α,ω-bis-acetylierten Polydimethylsiloxans mit einem Molekulargewicht von 4.000 (bestimmt durch Acetylbestimmung), 220 Gew.-Teile $Na_2CO_3$ und 3.000 Gew.-Teile Chlorbenzol werden 3 Stunden bei 140°C umgesetzt. Danach steigert man die Temperatur mit zunehmender Viskosität der Lösung auf 160 bis 180°C. Nach einer Gesamtreaktionszeit von 7 Stunden kühlt man ab, filtriert und dampft das Lösungsmittel ab. Das resultierende Produkt stellt einen Kautschuk dar mit einem Staudingerindex von 1,1 dl/g (in Tetrahydrofuran).

Beispiel 2

89,5 Gew.-Teile eines Celluloseacetopropionats mit ca. 58 % Propionsäure- und ca. 5 % Essigsäuregruppen und einer relativen Viskosität ($\eta_{rel}$) von 4,2 (2 Gew.-%ige Lösung in Aceton bei 20°C), 0,5 Gew.-Teile des Blockcopolymeren aus Beispiel 1, 8 Gew.-Teile Dibutyladipat und 2 Gew.-Teile Dioctyladipat werden in einem Doppelwellenextruder bei 200°C bis 220°C vermischt und granuliert. Das Granulat wird anschließend bei einer Massetemperatur von 240°C auf einer Spritzgußmaschine zu Prüfkörpern verspritzt.

Die Kerbschlagzähigkeit (nach DIN 53 453) hatte einen Wert von 6,6 kJ/m², bei Prüfung der Schlagzähigkeit bei –40°C (DIN 53 453) waren 25 % der Prüfkörper gebrochen, die Erweichungstemperatur nach Vicat B (nach DIN 53 460) war 84°C.

Beispiel 3 (Vergleich)

90 Gew.-Teile des in Beispiel 2 eingesetzten Celluloseacetopropionats, 8 Gew.-Teile Dibutyladipat und 2 Gew.-Teile Dioctyladipat werden wie in Beispiel 2 beschrieben vermischt, granuliert und zu Prüfkörpern verspritzt.

Die Kerbschlagzähigkeit (nach DIN 53 453) beträg t 3,4 kJ/m², bei Prüfung der Schlagzähigkeit bei –40°C (DIN 53 453) sind 65 % der Prüfkörper gebrochen, die Vicat B-Erweichungstemperatur (DIN 53 460) liegt bei 83°C.

## Patentansprüche

1. Thermoplastische Formmassen, bestehend aus
(1) 70 bis 99,9 Gew.-% eines Celluloseesters oder Cellulosemischesters,
(2) 0,1 bis 30 Gew.-% eines blockartig aufgebauten Kautschukpolymeren aus wiederkehrenden Struktureinheiten (I) mit Molekulargewichten von 10.000 bis 1.000.000

$$-\!\!\left[A-B\right]\!\!- \qquad I$$

wobei A bifunktionelle Polysiloxansegmente der Formel

$$-\!\!\left[(R^1)(R^2)SiO\right]_x\!\!- \qquad II$$

mit $R^1$ und $R^2$ = Aryl oder Alkyl und
x eine Zahl, so daß das Molekulargewicht ≧500 ist und B bifunktionelle aliphatische Polyesterund/oder aliphatische Polyethersegmente mit Molekulargewichten ≧ 800 bedeuten und die Glasübergangstemperaturen der polymeren Blöcke A und B unterhalb von 20°C liegen,
(3) die zusätzlich 0 bis 30 Gew.-% bezogen auf das Gemisch von (1) und (2) Weichmacher enthalten.

2. Thermoplastische Formmassen nach Anspruch 1 bestehend aus
(1) 70 bis 99,9 Gew.-% der Komponente (1)
(2) 0,1-5 Gew.-% der Komponente (2)
(3) 0-30 Gew.-% der Komponente (3)
(jeweils bezogen auf die genannte Formmasse)
wobei sich die Prozentzahlen zu 100 addieren müssen.

3. Thermoplastische Formmassen nach Anspruch 1, bestehend aus
1) 75 bis 99 Gew.-% der Komponente (1)
2) 0,25 bis 3 Gew.-% der Komponente (2) und
3) 0,75 bis 24,75 Gew.-% der Komponente (3),
(jeweils bezogen auf die genannte Formmase)
wobei sich die Prozentzahlen zu 100 addieren müssen.

4. Thermoplastische Formmassen nach den Ansprüchen 1 und 2, enthaltend als Komponente (1) Celluloseacetobutyrat, Celluloseacetopropionat, Celluloseacetat oder Mischungen daraus.

## Claims

1. Thermoplastic moulding compounds consisting of
(1) 70 to 99.9% by weight of a cellulose ester or cellulose mixed ester,
(2) 0.1 to 30% by weight of a block-like rubber polymer of recurring structural units (I) having molecular weights of 10 000 to 1 000 000

$$-\!\!\left[A-B\right]\!\!- \qquad (I)$$

in which A represents bifunctional polysiloxane segments having the formula

$$-\!\!\left[(R^1)(R^2)SiO\right]_x\!\!- \qquad (II)$$

where $R^1$ and $R^2$ = aryl or alkyl and x is a number so that the molecular weight is ≥ 500, and B represents bifunctional aliphatic polyester and/or aliphatic polyether segments having molecular weights ≥ 800 and the glass transition temperatures of the polymeric blocks A and B are below 20°C, and additionally containing
(3) 0 to 30% by weight, based on the mixture of (1) and (2), of plasticizers.

2. Thermoplastic moulding compounds as claimed in claim 1 consisting of
(1) 70 to 99.9% by weight of component (1),
(2) 0.1 to 5% by weight of component (2) and
(3) 0 to 30% by weight of component (3)
(based in each case on the weight of the moulding compound), the percentages having to add up to 100.

3. Thermoplastic moulding compounds as claimed in claim 1 consisting of
(1) 75 to 99% by weight of component (1),
(2) 0.25 to 3% by weight of component (2) and
(3) 0.75 to 24.75% by weight of component (3)
(based on in each on the weight of the moulding compound), the percentages by weight having to add up to 100.

4. Thermoplastic moulding compounds as claimed in claims 1 and 2 containing as component (1) cellulose acetobutyrate, cellulose acetopropionate, cellulose acetate or mixtures thereof.

## Revendications

1. Matières à mouler thermoplastiques consistant en
(1) 70 à 99,9% en poids d'un ester cellulosique ou d'un ester cellulosique mélangé,
(2) 0,1 à 30% en poids d'un polymère du type caoutchouc, à structure en blocs, consistant en motifs de structure répétés (I) ayant des poids moléculaires de 10 000 à 1 000 000

$$-\!\left[A-B\right]\!- \qquad \text{I}$$

dans laquelle A représente des segments de polysiloxanes bifonctionnels de formule

$$-\!\left[(R^1)(R^2)SiO\right]_x\!- \qquad \text{II}$$

dans laquelle
$R^1$ et $R^2$ représentent des groupes aryle ou alkyle et
x est un nombre tel que le poids moléculaire soit supérieur ou égal à 500, et
B représente des segments de polyesters aliphatiques et/ou de polyéthers aliphatiques bifonctionnels à des poids moléculaires supérieurs ou égaux à 800, les températures de transition du second ordre des blocs polymères A et B étant inférieures à 20°C, ces matières à mouler contenant en outre
(3) 0 à 30% en poids, par rapport au mélange de (1) et (2), de plastifiants.

2. Matières à mouler thermoplastiques selon la revendication 1, consistant en
(1) 70 à 99,9% en poids du composant (1),
(2) 0,1 à 5% en poids du composant (2),
(3) 0 à 30% en poids du composant (3)
(dans tous les cas par rapport à la matière à mouler en question) le total des pourcentages représentant 100.

3. Matières à mouler thermoplastiques selon la revendication 1, consistant en
(1) 75 à 99% en poids du composant (1),
(2) 0,25 à 3% en poids du composant (2) et
(3) 0,75 à 24,75% en poids du composant (3),
(dans tous les cas par rapport à la matière à mouler en question) le total des pourcentages représentant 100.

4. Matières à mouler thermoplastiques selon les revendications 1 et 2, contenant en tant que composant (1) de l'acétobutyrate de cellulose, de l'acétopropionate de cellulose, de l'acétate de cellulose ou un mélange de ces esters.